# EUROPEAN PATENT APPLICATION

(11) **EP 3 343 206 A1**
(43) Date of publication of application: **04.07.2018**
(21) Application number: 16206953.8
(22) Date of filing: 27.12.2016
(51) Int. Cl.: G01N 21/77, G01N 21/64

(54) **SYSTEM AND METHOD FOR DETECTION OF A GASEOUS ALDEHYDE**

(71) Applicant: Koninklijke Philips N.V., 5656 AE Eindhoven (NL)
(72) Inventor: CHEN, Shuang, 5656 AE Eindhoven (NL); KONG, Tao, 5656 AE Eindhoven (NL); CHEN, Xiangyang, 5656 AE Eindhoven (NL)
(74) Representative: de Haan, Poul Erik

(57) **Abstract**

The present invention relates to a system (10) for detection of a gaseous aldehyde (34). The system comprises a container (20) having a carrier medium (22), the carrier medium (22) having dispersed carbon element based dots (24) with photoluminescence property; an air inlet (30) for guiding a gas flow (32) comprising the gaseous aldehyde (34) to pass through the carrier medium (22); a light source (40) for emitting an excitation light (E) and for guiding the excitation light (E) through the carrier medium (22); a detector (50) for detecting luminescent light (L) triggered by the excitation light (E), the luminescent light (L) having a luminescence property; and a controller (60) for detecting concentration of the gaseous aldehyde (34) based on a change of the luminescence property.

## Description

### FIELD OF THE INVENTION

The present invention relates to the detection of gaseous aldehydes. In particular, the present invention pertains to a method and system for the detection of gaseous aldehydes employing carbon element based dots.

### BACKGROUND OF THE INVENTION

A number of gaseous aldehydes are known which have been proven as dangerous pollutants which can be frequently detected indoor and building environments as well as working areas. Examples of such gaseous aldehydes comprise formaldehyde, and other gaseous aldehydes, such as acetaldehyde, as well as inorganic gases including ammonium, sulphur dioxide and nitrogen dioxide.

For example, formaldehyde is of significant consideration for human health due to its toxicity, high volatility and long-term release. Its primary non-industrial sources include pressed wood products (hardwood plywood wall paneling/ fiberboard, etc.), combustion sources, tobacco smoke, textiles and glues. Formaldehyde is also a potential health risk to people even at very low concentrations. It may cause eye, nose and throat irritation, asthma, lung damage, nausea and most importantly, it has been recognized as one of the severe carcinogens. In this regard it is essential to realize sensitive and selective detection of formaldehyde. Indoor formaldehyde concentration is very low (0.1 mg/m³ according to GB/T 18883-2002) and indoor environmental is very complex compared with industrial applications.

In the past few decades, several methods have been established for high-efficiency sensing of gaseous aldehydes, such as formaldehyde, including spectrophotometric, gas chromatography mass spectroscopy (GC-MS), and electrochemical methods. Current low-cost solutions are based on electrochemistry sensors and micro- and nano structured metal oxides based sensors (MOX sensors) are currently the main consumer-based solutions. Current solutions for detecting formaldehyde are disclosed in Chung Po-Ren et al., Formaldehyde Gas Sensors: A Review; Sensors 2013, 13, pp. 4468-4484.

The known sensors for gaseous aldehydes are, however, usually responding to a range of interfering gases, such as hydrogen, carbon oxide and alcohols, resulting in inaccurate sensing results. One of the main reasons resides in the difficult pre-separation of gas samples, such as air. In addition, sensing materials/ electrodes have been proven sensitive/ reactive to a number of different gases getting in contact with the sensor rendering proper identification of a particular analyte difficult.

Current available systems and methods for detection of gaseous aldehydes include for instance spectrophotometers, GC, High-performance liquid chromatography (HPLC), ion chromatography, and polarography. These systems and methods suffer from expensive bulky instrumentation with high power demand and often require well-trained operators. They are often susceptible to breakdown and do not afford real-time analysis. Transducer-based sensing methods, like amperometric methods (electrochemical) are conductance methods (e.g. MOX sensors) have technological limitations concerning inaccuracy, non-selectivity, i.e. cross-sensitivity over a range of interfering substances, and short lifetime. The reliable sensing of gaseous aldehydes is therefore still a critical problem.

### SUMMARY OF THE INVENTION

It is an object of the present invention to provide an improved system and method for detection of a gaseous aldehyde.

In a first aspect of the present invention a system for detection of a gaseous aldehyde is presented. The system comprises:
- a container having a carrier medium, the carrier medium having carbon element based dots with photoluminescence property and dispersed therein;
- an air inlet for guiding a gas flow comprising the gaseous aldehyde to pass through the carrier medium;
- a light source for emitting an excitation light and for guiding the excitation light through the carrier medium;
- a detector for detecting luminescent light triggered by the excitation light, the luminescent light having a luminescence property; and
- a controller for detecting concentration of the gaseous aldehyde based on a change of the luminescence property.

In a further aspect of the present invention a method for detection of a gaseous aldehyde is provided. The method comprises the steps of:
- guiding a gas flow comprising the gaseous aldehyde through a carrier medium, the carrier medium having carbon element based dots with photoluminescence property and dispersed therein;
- guiding an excitation light of a specific wavelength through the carrier medium;
- detecting luminescent light triggered by the excitation light, the luminescent light having a luminescence property; and
- detecting concentration of the gaseous aldehyde based on a change of the luminescence property.

Such a system and method is selective, low-cost, and is suitable for long-term detection and is small sized, non-toxic and readily available for consumer use. The system and method can be performed in real-time without necessitating bulky instrumentation with high power demand as well as well-trained operators.

The present invention is based on the use of carbon element based dots with photoluminescence (PL) properties, such as graphene dots (also denominated graphene quantum dots), carbon nanodots (also denominated carbon quantum dots) and polymer dots, for the detection of gaseous aldehydes, such as formaldehyde. Carbon element based dots own PL properties which originate from two reasonable mechanisms: the surface/edge state and conjugated π-domains (Zhu S. et al., The photoluminescence mechanism in carbon dots (graphene quantum dots, carbon nanodots, and polymer dots: Current state and future perspective, Nano Research, vol. 8, pp. 355-381).

The surface/edge state contains defects, oxygen groups or functional groups which may cause the luminescence property change after reaction with the gaseous aldehyde. It has been found that with the increase of a gaseous aldehyde in a carrier medium having carbon element based dots dispersed therein, the luminescent properties, such as intensity or luminescence lifetime of the products generated by the reaction of carbon element based dots and gaseous aldehyde, decreases and may follow an exponential decay within a certain range. The present system and method is therefore based on quenching the intensity of luminescence light of a free/unreacted carbon element based dot molecule in comparison to the intensity of luminescence light of products generated by the reaction between a carbon element based dot molecule and one or more gaseous aldehyde molecules.

The present method and system is therefore well applicable for detection of a gaseous aldehyde exhibiting chemical reaction properties, such as formaldehyde, which may react with functional groups presented on carbon element based dots, particularly graphene dots and carbon nanodots. Hence, the system according to the present invention is small, has size-tunable florescent properties and offers a long lifetime rendering the system suitable for long-term investigations. The present system offers a high selectivity to a gaseous aldehyde to be detected.

The term "carbon element based dots" as used herein refers to carbon based material in the nanometer scale. Carbon element based dots may exhibit an average largest dimension of 100 nm or less, preferably 50 nm or less, 20 nm or less, and more preferably 10 nm or less, such as 5 nm or less. The largest dimension designates the largest size of the carbon element based dots in one spacial direction. This means that the other (two) spacial directions of the carbon element based dots exhibit the same or even smaller diameters than the average largest diameter. The size of the carbon element based dots is usually not determined by means of any method but is a result from the preparation method. For example, carbon quantum dots of particular sizes may be synthesized by laser irradiation of graphite flasks in polymer solution. Size control of the carbon quantum dots may be realized by tuning laser pulse width. Other methods offering particular sizes of carbon element based dots are available in the art and encompass any "top-down" or "bottom-up" route for the synthesis thereof. Carbon element based dots may be prepared and functionalized according to Liu R. et al.; An Aqueous Route to Multicolor Photoluminescent Carbon Dots Using Silica Spheres as Carriers, Angew. Chem. Int. Ed. 2009, 48, pp. 4598-4601; Chen X. et al., "Purification, organophilicity and transparent fluorescent bulk material fabrication derived from hydrophilic carbon dots", RSC Adv., 2015, 5, pp. 14492 -14496 and Wang Y. et al .;"Carbon quantum dots: synthesis, properties and applications", J. Mater. Chem. C, 2014, 2, 6921-6969, the contents of which are incorporated herein by way of reference in their entirety. Preparation of graphene dots/graphene quantum dots and polymer dots with a functionalized surface is disclosed for example in Tetsuka H. et al.; Optically tunable amino-functionalized graphene quantum dots, Advanced Materials, 2012, vol. 24, pp. 5333-5338 and Zhu S. et al., The photoluminescence mechanism in carbon dots (graphene quantum dots, carbon nanodots, and polymer dots): Current state and future perspective; Nano Research; 2015, vol. 8, pp. 355-381, the contents of which are incorporated herein by way of reference in their entirety. The morphological, elemental and structural characterizations of carbon element based dots may be furthermore determined and/or ascertained by well known methods such as scanning electron microscopy (SEM), including low-vacuum SEM and low-temperature SEM, transmission electron microscopy (TEM), atomic force microscopy (AFM), photon correlation spectroscopy (PCS), X-ray photoelectron spectroscopy, and X-ray diffraction (XRD). Photoluminescence properties of carbon element based dots maybe easily tested.

The term "approximately" or "about" as used herein designates a range associated with a value, such as ± 10% or less, preferably ± 5 % or less, ± 2% or less or ± 1% or less, more preferably the exact value is encompassed. For instance, "approximately 400 nm" may designate any value within the range of 360 nm from 440 nm, i.e. ± 10% or less. Likewise, "about 100 g/mol" may designate any value within the range of 90 g/mol from 110 g/mol, i.e. ± 10% or less.

The term "detecting" or "detection" as used herein pertains to the qualitative or quantitative assessment of a gaseous aldehyde. Hence, "detecting" or "detection" may indicate that a gaseous aldehyde is simply present. Alternatively, the amount or concentration, i.e. quantification, of said gaseous aldehyde maybe encompassed.

The term "average" as used herein in conjunction with a size or dimension in the nanometer range or nanometer scale refers to the median size and median dimension, respectively. As indicated above such as size/diameter may be determined/ascertained by scanning electron microscopy (SEM), including low-vacuum SEM and low-temperature SEM, transmission electron microscopy (TEM), atomic force microscopy (AFM), photon correlation spectroscopy (PCS), X-ray photoelectron spectroscopy, and X-ray diffraction (XRD).

According to a preferred embodiment of the present invention, the carbon element based dots are one or more of graphene dots, carbon nanodots and polymer dots.

It will be appreciated that graphene dots (also denominated graphene quantum dots), carbon nanodots (also denominated carbon quantum dots) and polymer dots are only examples of carbon element based dots and other carbon based species of the above-mentioned size range may be employed as well. The carbon element based dots usually exhibit a surface modification/ functionalization rendering them suitable to react with specific gaseous aldehydes. As indicated above, the surface modification of the carbon element based dots is usually a result of the synthesis method chosen. It will be appreciated that the surface modification in case of aldehyde detection may encompass for example an imine and/or amino functionality. Photoluminescence properties of graphene dots, carbon nanodots and polymer dots may be easily tested.

It will be appreciated that the gaseous aldehydes need not necessarily form a covalent binding with either the carbon element based dots or a surface functionalization thereof. Rather any reaction may be employed wherein products generated between gaseous aldehyde molecules and carbon element based dots or a surface functionalization thereof is formed. In other words, non-covalent binding between gaseous aldehyde and carbon element based dots or its surface functionalization is encompassed as well. An example of covalent binding encompasses binding of amino or imine functionalized carbon element based dots to aldehydes, such as formaldehyde.

According to a preferred embodiment of the present invention the gaseous aldehyde is one or more of a formaldehyde, acetaldehyde, propionaldehyde, benzaldehyde and acrylaldehyde.

Formaldehyde is a preferred gaseous aldehyde. Formaldehyde detection may be performed by graphene dots or carbon nanodots. The carbon nanodots and/or graphene dots for formaldehyde detection may be prepared as indicated herein.

The efficient range for formaldehyde detection may be about 7.69 to 61.50 µg (formaldehyde) / mL (carbon dots). Supposing that a device includes 1 mL carbon nanodots water solution, then the mass range of formaldehyde which can be detected is about 7.69 to about 61.50 µg. According to the Chinese air quality standard (GB/T 18883-2002) formaldehyde should be below 0.1 mg/m³, namely 0.1 µg/L. A basic pumping air volume demanded is proposed by the following process: V = m/c = 7.69/0.1-61.50/0.1= 76.90-615.00 L. V may show negative correlation with the concentration of carbon nanodots which indicates that a device of proper volume can be designed.

Graphene quantum dots (GQDs) are preferably used for the detection of a gaseous aldehyde, particularly for formaldehyde detection. Single GQD is usually a crystalline material with diameter of below 10 nm and thickness of several graphene layers. GQDs mainly consist of carbon and possess photoluminescence property under light excitation. It is reported that GQDs with edge-terminated primary amino-groups allow the electronic structure to be modified with the effective orbital resonance of amino-varieties and graphene core. The GQDs with amino-groups possess high quantum yield because of the reduction of carboxylic and epoxide groups which act as the non-radiative electron-hole recombination center. This property ensures the high photoluminescence intensity of the amino group modified GQDs (NH₂-GQDs), potential beneficial for the high-sensitivity sensing. Additionally, the surface/edge states may play an important role on the PL property of GQDs. If the surface/edge of GQDs is destroyed or disappeared, the PL intensity may be decreased or even vanish. Based on the above discussion, when formaldehyde reacts with amino groups of the GQDs, the PL intensity will be expected to decrease. According to the same principle detection of other gaseous aldehydes than formaldehyde is possible as well.

1 mg/mL amino group functionalized GQDs may be used for detecting several hundreds of µg/mL formaldehyde. It has been observed that at least 210 µg/mL formaldehyde (320 µg formaldehyde in 1.5 mL GQDs solution) still induces photoluminescence intensity decrease. The lifetime of amino group functionalized GQDs based formaldehyde sensor can be estimated as below: 1. Liquid or gel form GQDs are stored in a test tube. Supposing that 1 g GQDs is utilized, the detectable total amount of formaldehyde for 1g GQDs can be estimated as 1000 * 210 µg = 210 mg; 2. Supposing the cross-section area of the test tube is 3 cm * 3 cm=0.0009 m²; 3. Supposing that the air speed is 0.4 m/s, the formaldehyde concentration is 0.1 mg/m³ (100 µg/m³) in the air, which is consistent with the indoor air pollutants level of China standard; 4. Supposing that the sampling time is 200 s, then the total amount of the formaldehyde during the sampling time can be calculated as: 200 s * 0.4 m/s *0.0009 m² * 100 Ilg/m³= 7.2 µg. 5. Based on 1-4, 1 g GQDs can realize 210 mg/ 7.2 µg ∼ 29,000 tests. 6. If 10 min for each tests (including the sampling time and interval), 1 g GQDs can be used as long as 290,000 min (about 200 days). 7. Longer lifetime may be achieved by employing more GQDs in the test.

Suitable surface functionalization allows the formation of products between these molecules and carbon element based dots are well known in the art.

According to an embodiment of the present invention, the carrier medium is one or more of a liquid, gel and porous solid material. It will be appreciated that the skilled person may easily identify suitable carrier medium upon performing tests with the gaseous aldehyde to be detected and the selected carbon element based dots.

The present carbon element based dots easily disperse in water and other solvents due to their small size and (optional) surface functionalization. Preferred liquids encompass water and buffer solutions, such as phosphate buffer, as the same are easy to handle and non-toxic. Water or buffer solutions offer high solubility towards aldehydes and particularly formaldehyde. Furthermore, water solubility of most volatile organic gases, such as alkanes, BTX (benzene, toluene, xylene), hydrocarbons, esters, is low. Hence, said gases do not disturb. Furthermore, aldehyde binding solutions, such as formaldehyde binding solutions, may be employed affording the specific enrichment and detection of aldehydes employing the present system with water as carrier medium. Other liquids encompass organic solvents which may be selected so as not to interact with the gaseous aldehyde and the functional group(s) of carbon element based dots. It will be appreciated that the skilled person may easily identify proper organic solvents. Methanol or ethanol may be an example for such a non-interacting, i.e. inert, solvent, which may be used for formaldehyde detection employing amino and/or imine group functionalized carbon element based dots.

Gels refer to any cross-linked system exhibiting no flow when in the steady-state. The preparation of gels is well known in the art. Examples of suitable gels encompass polymer networks of inert materials, i.e. materials which do not interact/disturb upon gaseous aldehyde detection employing the present carbon element based dots. Possible materials encompass hydrogels, such as polyacrylate based hydrogels.

Suitable porous solid materials encompass glasses or transparent plastics which do not interact with the excitation light wavelength and luminescent light wavelength or with a respective excitation light wavelength range and luminescent light wavelength range. Such suitable porous glasses permit transmission of the excitation light and/or luminescent light to at least about 70% or more, such as at least about 80% or more, at least about 90% or more, at least about 95% or more or at least about 99.5% or more. Examples of suitable glasses include fused silica.

In case the carbon element based dots are dispersed in a gel or a porous solid material, said carbon element based dots are finally dispersed within said gel or porous solid material in a manner that a gas flow guided therethrough gets in contact with the carbon element based dots. An advantage of the porous solid material resides in the re-use of the respective container having a porous solid material as carrier medium with dispersed carbon element based dots.

According to still another preferred embodiment of the present invention, carbon element based dots are functionalized with an organic polar group during the synthesis of the carbon element based dots or applying a further functionalization process to the carbon element based dots. Organic polar groups encompass the above-mentioned functionalization e.g. imine- (=NH), amino- (NH₂-) and designate any organic group or functionality having a net dipole as a result of the opposing charges from polar bonds arranged asymmetrically.

Using carbon element based dots which are functionalized with amino group may further improve the accuracy in detection of gaseous aldehydes.

It will be appreciated that the skilled person may select the possible functionalization method thereof with respect to the requirements of the present system, i.e. the gaseous aldehyde to be detected as well as the (inert) carrier medium.

Preferably, the organic polar groups are attached to the carbon element based dots by means of a spacer, said spacer bridging an organic polar group and a carbon element based dot. In general, any spacer may be employed having a molecular weight of about 120 g/mol or less, preferably about 100 g/mol or less, such as about 90 g/mol or less, about 80 g/mol or less, about 70 g/mol or less, about 60 g/mol or less, about 50 g/mol or less, about 40 g/mol or less or about 30 g/mol or less. Examples of suitable spacers encompass linear alkyl groups of the composition (CH₂)n wherein n is an integer of from 1 to 5, such as 2, 3 or 4.

According to an embodiment of the present invention, the gas flow is air. The air is not particularly limited and may be e.g. air from a working environment or air from private environment. The air may be filtrated for particles, such as dust before providing to the air inlet of the present system. Any pump may be used for this purpose. Alternatively, a gas mixture may be employed as gas flow, such as process gas employed in industry.

According to still another embodiment of the present invention the excitation light has a wavelength between 250 nm and 500 nm, preferably between 250 and 450 nm, between 300 and 400 nm, more preferably between 350 and 380 nm. Particular preferred excitation light has a wavelength between 350 nm and 365 nm. The luminescent light has a wavelength between 400 nm and 600 nm, preferably between 410 and 550 nm, between 420 and 500 nm, more preferably between 430 and 450 nm. Particular preferred luminescent light has a wavelength between 435 nm and 440 nm. It will be appreciated that the wavelengths of the excitation light and/or luminescent light are not particularly limited. Any wavelength range may be employed as long as excitation light is sufficiently distinguished from luminescent light. For instance, the wavelength of the excitation light may be approximately 350 nm and the wavelength of the luminescent light may be approximately 435 nm.

Any suitable light source for generating excitation light of the required wavelength may be employed. Examples encompass white light sources, such as a monochromator originated from mercury lamp, light emitting diode (LED), laser diode (LD) and conventional lasers. The excitation light source may be further combined with one or more filters for obtaining the required excitation light wavelength or excitation light wavelength range. Said light sources are known in the art and may be may be the same as employed in known spectrophotometers.

Suitable detectors for detecting luminescent light triggered by the excitation light as well as a luminescence property thereof are well known in the art. The detector may also encompass one or more filters. Suitable light sources as well as detectors maybe the same as employed in known spectrophotometers.

According to still another embodiment of the present invention the luminescence property is intensity and/or the luminescence lifetime of the product of the carbon element based dots and gaseous aldehyde. Under common/dark condition, carbon element based dots are in base state. After interact with incident light, the carbon element based dots will be transferred to excited state, followed by emission of photons when the carbon element based dots are relaxed back to base state. The fluorescence lifetime may be determined for instance in form of the time during which the reaction product between carbon element based dots and gaseous aldehyde remain on its excited state under excitation light.

According to still another embodiment of the present invention the system may comprise a membrane, the membrane forming part of a wall of the container, wherein the gas flow comprising the gaseous aldehyde passes through the membrane.

Any membrane may be employed permitting passing a gas flow and the gaseous aldehyde therethrough and which membrane prevents at the same time passing of the carrier medium, such as water or any other solvent. For instance, the membrane may permit passing of air therethrough, the air suspected to be contaminated with formaldehyde, while preventing passing of water as a carrier medium. Such semipermeable membranes may encompass for instance membranes made from polyvinylidene fluoride. Said membranes may exhibit different pore sizes according to the particular need.

According to still another embodiment of the present invention, the system further comprises one or more of a pump, a calibration unit, an input, a storage, an output and means for remote signal transfer.

The pump may be designated for pumping a gas flow to the air inlet, the gas flow having a sufficient pressure for passing through their inlet of the container, the carrier medium as well as an outlet or opening provided in the container.

A calibration unit maybe in form of redundant/secondary parts employed in the system for detection of a gaseous aldehyde. For instance, the system may comprise two or more containers, each of them having a carrier medium, the carrier medium having carbon element based dots dispersed therein. The carbon element based dots may exhibit the same or different concentration permitting direct comparison of the values obtained. Same or different light sources as well as detectors may be employed. In case the same light source and/or the same detector are employed for a plurality of containers, mirrors may be arranged in a suitable manner and controlled for guiding excitation light through the carrier medium of the different containers and detector. Alternatively, it is also conceivable to move the container.

The input may encompass any kind of keyboard or keypad, for instance the keyboard of a mobile phone and a computer.

The storage is not particularly limited and may encompass means for transient storage and non-transient storage, such as short-term storage as well as long-term storage. For example, a hard-disk may be employed.

Output means are well known to the skilled person and may be in form of any display, including a monitor of a computer or laptop and the display of a mobile phone.

Input, storage, output and/or any other components of the present system may be provided with means for remote signal transfer. Remote/distant signal transfer encompasses transfer via internet and/or radio signals. Remote/distant signal transfer is preferably performed wirelessly. For example, the present system may be provided in form of a sensor receiving input from a mobile phone as well as showing the detection concentration of the gaseous aldehyde on the display of the same mobile phone.

According to still another embodiment of the present invention, the system further comprises a reference system for detection of the gaseous aldehyde. The reference system may be any alternative method known for the detection of the gaseous aldehyde to be detected. Preferably, the reference system employs essentially the same detection technique as the present system. As the present system may be in form of a common spectrophotometer, the reference system may be in form of a similar or the same spectrophotometer. This will assist in reducing the number of parts of the system as the same parts maybe employed. It will be however appreciated that any other kind of reference system for detection of the same gaseous aldehyde may be employed.

According to still another embodiment of the present invention an air purifier, air sensor box or stand alone sensor device comprising the present system may be provided.

An air purifier is a device which removes contaminants from the air in a room. These devices are commonly marketed as being beneficial to allergic sufferers and asthmatics and may be reduced or eliminate second-hand tobacco smoke. Commercially graded air purifiers are manufactured as either small stand-alone units or larger units that can be affixed to an air handler unit or heating, ventilation and air conditioning unit found in a medical, industrial and commercial industries.

An air sensor box may refer to a system which transmits the detected concentration of gaseous aldehyde to a remote device, such as a mobile phone and/or a computer. The air sensor box may comprise further sensors designated to detect any quality of air, such as detection of one or more of gaseous aldehyde, air humidity and air temperature.

A stand-alone sensor device maybe in form of a spectrophotometer, i.e. a device exhibiting all constituents required for operation of the system as well as output means indicating the detected concentration of the gaseous aldehyde.

Preferred embodiments of the invention are defined in the dependent claims. It shall be understood that the claimed method has similar and/or identical preferred embodiments as the claimed device and as defined in the dependent claims.

### BRIEF DESCRIPTION OF THE DRAWINGS

These and other aspects of the invention will be apparent from and elucidated with reference to the embodiment(s) described hereinafter. In the following drawings
Fig. 1 shows a schematic view of the system according to an embodiment of the present invention;
Figs. 2A and 2B show other schematic views of the system according to other embodiments of the present invention;
Fig. 3A and 3B shows an exemplary synthesis of carbon element based dots functionalized with organic polar groups;
Fig. 4 shows results of photoluminescence tests performed with different amounts of diluted formaldehyde solution added into a carbon dot solution;
Figs. 5A and 5B show spectra of luminescence intensity dependent on different amounts of formaldehyde;
Fig. 6 shows the response of graphene quantum dots functionalized with amino-groups towards different amounts of formaldehyde;
Fig. 7 shows the response of graphene quantum dots functionalized with amino groups towards addition of various species including methanol, ethanol, acetone and toluene;
Fig.8 shows the response of carbon dots towards different concentrations of ethanol;
Fig. 9 shows an embodiment of the present system.

### DETAILED DESCRIPTION OF THE INVENTION

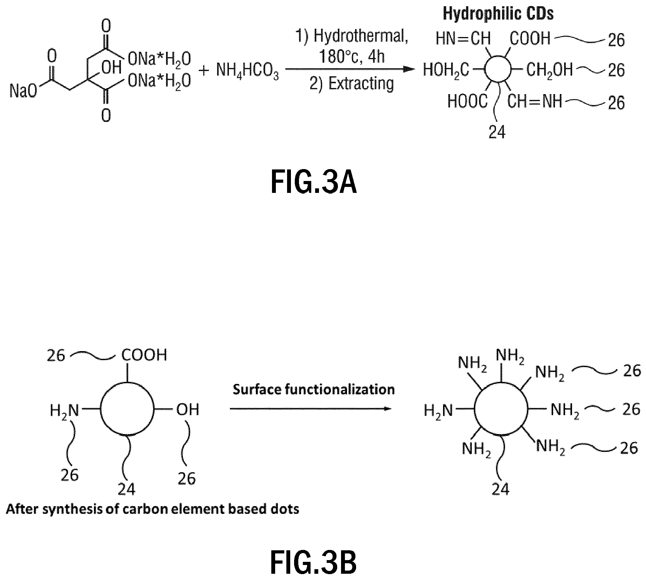

The examples outlined hereinafter rely on the use of carbon quantum dots or graphene dots. The carbon quantum dots are synthesized following the route depicted in Fig. 3, whereas graphene dots are prepared according to Tetsuka H. et al.; Optically tunable amino-functionalized graphene quantum dots, Advanced Materials, 2012, vol. 24, pp. 5333-5338.

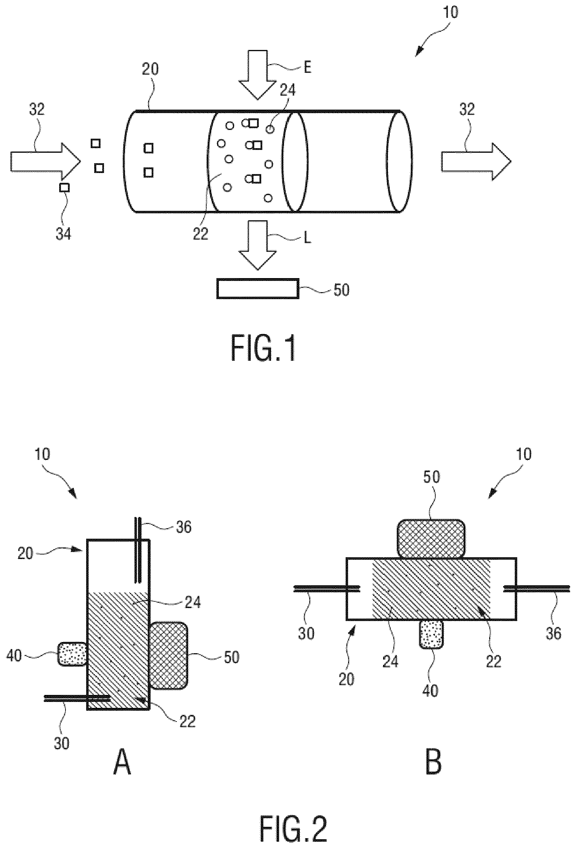

Fig. 1 shows a schematic view of the system 10 according to one embodiment of the present invention for detection of a gaseous aldehyde 34. A gas flow 32 comprising the gaseous aldehyde is passed through a container 20 having a porous solid material as carrier medium 22 disposed therein. The gas flow 32 is air suspected to carry formaldehyde as gaseous aldehyde. The porous solid material is made of fused silica allowing the passing of excitation light E of a wavelength of approximately 350 nm as well as luminescent light L having a wavelength of approximately 435 nm dependent on interaction. The container 20 is made from a transparent material permitting passage of said excitation light E and luminescent light L in an area wherein excitation light E generated from a halogen lamp enters the container as well as the area wherein luminescent light L leaves the container. The transparent material is made from fused silica as well. In the porous solid material carbon quantum dots 24 are dispersed. Said carbon quantum dots 24 are functionalized with amino groups (not shown) enabling covalent binding to formaldehyde as the gaseous aldehyde 34. Synthesis of amino group functionalized carbon quantum dots is performed as indicated in Fig. 3 below. Luminescent light L is detected by a conventional photodetector 50.

Fig. 2A shows another schematic view of system 10. Container 20 maybe in form of a transparent and sealed tube which exhibits air inlet 30 and air outlet 36. Water is used as carrier medium 22 exhibiting dispersed carbon element based dots 24, such as carbon quantum dots or GQDs. The inlet (30) is dipped into the solution having a position which is lower than that of the outlet (36). The inlet (30) is positioned in such a manner in the container 20 that leakage of the solution is avoided and incident and excited light is not interfered. Light source (40) and photodetector (50) are distributed on both side of the tube for providing and detecting luminescent light. Light source (40) and photodetector (50) can be positioned either symmetrically or asymmetrically. The light source may in the form of one ore more laser diodes, one or more LEDs, etc.

Fig. 2B shows of an alternative arrangement of the system 10 wherein the container 20 is provided with air inlet 30 and air outlet 36 in linear arrangement. This system may be used for solid phase situations wherein GQDs can be in the form of gel or distributed in porous, transparent substrates 20. Similar with that of liquid phase situation of Fig. 2A, air inlet (30), outlet (36), light source (40) and photodetector (50) are integrated.

Fig. 3A exemplarily shows the synthesis of water-soluble carbon nanodots 24 exhibiting organic polar groups 26. Wherein, 0.4 g sodium citrate di-hydrate, 3.0 g NH₄HCO₃ and 20 mL high-purity water are sealed into a 100 mL Teflon equipped stainless steel autoclave followed by hydrothermal reaction at 180 degrees for 4 hours. Then, 0.6 mg/mL organic polar group functionalized carbon nanodots are obtained by dialyzing for 16 hours. Further details may be derived from Chen X. et al., "Purification, organophilicity and transparent fluorescent bulk material fabrication derived from hydrophilic carbon dots", RSC Adv., 2015, 5, 14492 -14496, the contents of which are incorporated herein by way of reference. The examplary shown carbon nanodot 24 has organic polar groups 26, such as a - COOH group, -CH₂OH group, -CH=NH group, etc.. Alternatively or in addition, one or more of the organic polar groups 26 may be used for attachment/immobilization of the nanodots 24 on a carrier material which is either a gel or a porous material. Particular organic polar groups 26 maybe furthermore subjected to selective reactions for modification of the same. For instance, an imine residue may be easily converted to an amino functionality.

Fig. 3B exemplarily shows the surface functionalization results of carbon element based dots, using -NH₂ group as example. Without specific surface functionalization, the surface of carbon element based dots may possess little amount and different kinds of surface groups, such as -COOH, -OH or -NH₂. To functionalize the carbon element based dots, suitable methods can be chosen and generate carbon element based dots with plenty of desired functional groups, such as -NH₂ groups in Fig. 3B. Furthermore, the synthesis and surface functionalization methods for carbon element based dots are known in the art.

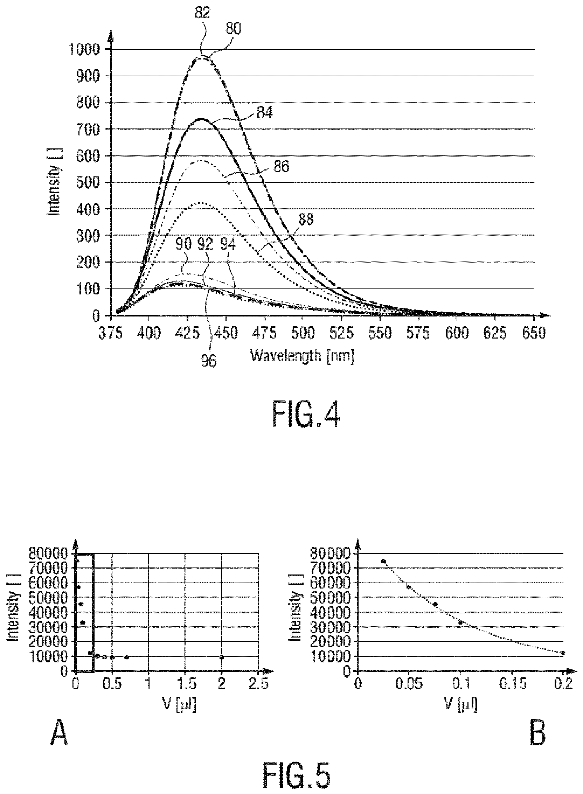

Fig. 4 shows change of intensity of luminescent light dependent from different concentrations of the diluted formaldehyde solution added into a carbon dots solution of Fig. 3. The luminescence tests are performed by spectrometer Hitach F-4600, work voltage 700 V, front Silt: 2.5 nm, back slit: 2.5 nm, excitation wavelength 350 nm and emission wavelength 435 nm. Different amounts of formaldehyde encompassing 0 µL (indicated by reference number 80), 0.025 µL (reference number 82), 0.05 µL (reference number 84), 0.075 µL (reference number 86), 0.1 µL (88), 0.2 µL (reference number 90), 0.3 µL (reference number 92), 0.4 µL (reference number 94), and 0.5 µL (reference number 96), respectively, are dissolved in high purity water, such as dd water, giving an end volume of 1 mL for each sample. It may be seen that increasing concentrations of formaldehyde result in decreased luminescence intensity, i.e. luminescence extinction.

Figs. 5A shows a spectrum of luminescence intensity of carbon quantum dots in dependence on different amounts of formaldehyde dissolved in water, such as double destilled (dd) water or deionized water, giving an end volume of 1 mL for each sample.

Fig. 5B shows the box of Fig. 5A in enlarged view. It maybe derived that amounts of about 0.05 µL to about 0.1 µL formaldehyde exhibit an essential linear dependency from luminescence intensity rendering said concentration range particularly suitable for the quantitative determination of formaldehyde.

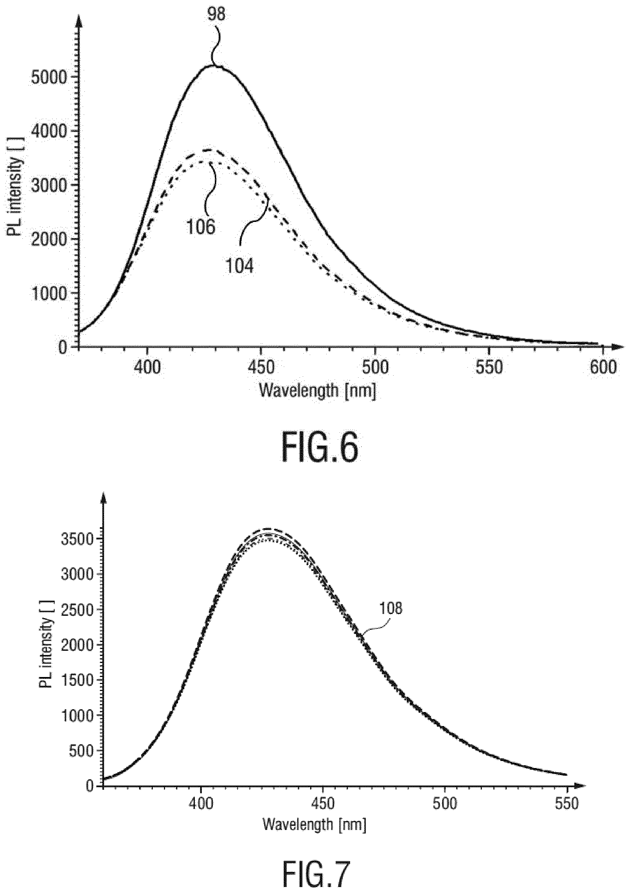

Fig. 6 shows the response of graphene dots functionalized with amino-groups towards different amounts of formaldehyde using 350 nm incident light. From the graph, 0 µg formaldehyde (indicated by reference number 98), 20 µg formaldehyde (indicated by reference number 104), and 40 µg formaldehyde (indicated by reference number 106) may be derived. It may be seen that 20 µg and 40 µg formaldehyde in 1.5 mL NH₂-GQDs solution induced around 32% and 35% intensity decrease, respectively, clearly showing that NH₂-GQDs are suitable for quantitative formaldehyde detection.

In addition, selectivity of the NH₂-GQDs towards formaldehyde has been tested. Responses to several common indoor air pollutants, such as methanol (1.66 wt.-%), ethanol (1.66 wt.-%), toluene (1.66 wt.-%), and acetone (1.66 wt.-%) were examined and results in Fig. 7 illustrate little response.

Fig. 7 shows a response of carbon quantum dots or graphene dots functionalized with amino groups towards addition of various species including methanol, ethanol, acetone and toluene (108). It maybe clearly derived that all said test substances do not result in any significant change of photoluminescent intensity and do not affect the wavelength of the photoluminescent light. In consequence, said species do not disturb formaldehyde detection and may be even used as carrier medium.

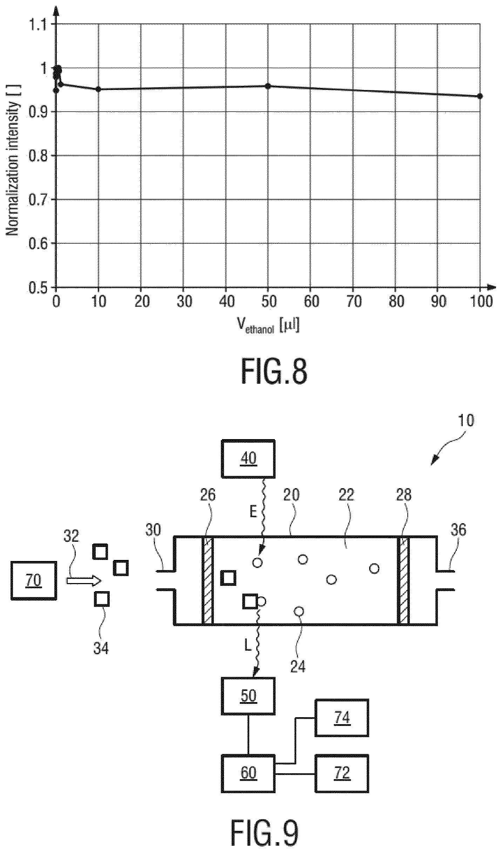

Fig. 8 shows the effect of different amounts of ethanol on formaldehyde detection with carbon quantum dots. Different amounts of ethanol, mixed with the same volume of formaldehyde, such as 1 µL formaldehyde, are dissolved in water, such as dd water, giving an end volume of 1 mL for each sample. From Fig. 8 it may be derived that different amounts of ethanol do not affect detection sensitivity.

Fig. 9 shows another example of a preferred system 10 for detection of formaldehyde as gaseous aldehyde 34. A conventional pump 70 provides gas flow 32 comprising gaseous aldehyde 34 through air inlet 30 of the container 20. A compartment having walls 26 and 28 made of semipermeable polyvinylidene fluoride (PVDF) membrane is arranged in the container 20. The semipermeable PVDF membrane permits passing of gas flow 32 and gaseous aldehyde 34 preventing at the same time passing of the carrier medium 20 and carbon quantum dots 24 therethrough. The compartment is filled with water as carrier medium employed as carrier medium 20. Carbon quantum dots 24 prepared according to the synthesis shown in Fig. 3 are dispersed in the water. As the carbon quantum dots exhibit an average diameter of less than 10 nm and are further functionalized with different organic polar groups (not shown), said carbon quantum dots do not form a mere dispersion in water, i.e. are finely divided therein, but are completely dissolved in the water. Gas flow 32 carrying inter alia formaldehyde molecules 34 may pass through membrane 26 and leaves through membrane 28 and outlet 36. At least some of the formaldehyde molecules forming the gaseous aldehyde 34 bind to the carbon quantum dots 24. Accordingly, the gas flow leaving the system 10 at outlet 36 is partially depleted from formaldehyde. Light source 40 emits citation light E in the water. In case excitation light E irradiates a carbon quantum dot, said carbon quantum dot emits luminescent light L having a different wavelength than excitation light. The intensity of luminescent light L will be quenched, i.e. reduced, in case a carbon quantum dot 24 forms a product with a gaseous aldehyde 34 molecule. The luminescent light L is detected by a photodetector 50. Controller 60 detects the concentration of the gaseous aldehyde 34 based on a change of the luminescence property, i.e. the intensity as well as the luminescence lifetime of the product of carbon nanodots and formaldehyde. A calibration unit 72 comprises another system according to the present invention and provides detection values to the controller 60. Reference system 74 is connected with the controller 60 as well. It will be appreciated that any computer system (not shown) may be employed for evaluation and storage of the results.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. System (10) for detection of a gaseous aldehyde (34), comprising:
- a container (20) having a carrier medium (22), the carrier medium (22) having dispersed carbon element based dots (24) with photoluminescence property;
- an air inlet (30) for guiding a gas flow (32) comprising the gaseous aldehyde (34) to pass through the carrier medium (22);
- a light source (40) for emitting an excitation light (E) and for guiding the excitation light (E) through the carrier medium (22);
- a detector (50) for detecting luminescent light (L) triggered by the excitation light (E), the luminescent light (L) having a luminescence property; and
- a controller (60) for detecting concentration of the gaseous aldehyde (34) based on a change of the luminescence property.

2. System (10) according to claim 1, wherein the carbon element based dots are one or more of graphene dots, carbon nanodots and polymer dots.

3. System (10) according to claim 1, wherein the gaseous aldehyde is one or more of formaldehyde, acetaldehyde, propionaldehyde, benzaldehyde and acrylaldehyde.

4. System (10) according to claim 1, wherein the carrier medium (22) is one or more of a liquid, gel and porous solid material.

5. System (10) according to claim 1, wherein the carbon element based dots (24) are functionalized with organic polar groups (26), wherein the organic polar group (26) is amino groups.

6. System (10) according to claim 1, wherein the gas flow (32) is air.

7. System (10) according to claim 1, wherein the excitation light (E) has a wavelength between 250 nm and 500 nm and the luminescent light (L) has a wavelength between 400 nm and 600 nm.

8. System (10) according to claim 1, wherein the luminescence property is intensity and/or fluorescence lifetime of the product generated by the reaction between carbon element based dots (24) and gaseous aldehyde (34).

9. System (10) according to claim 1, wherein the air inlet (30) comprises a membrane (26), the membrane (26) forming part of a wall of the container (20), wherein the gas flow (32) comprising the gaseous aldehyde (34) passes through the membrane (26).

10. System (10) according to claim 1, further comprising one or more of a pump (70), a calibration unit (72), an input, a storage, an output and means for remote signal transfer.

11. Air purifier, air sensor box or standalone sensor device comprising the system (10) according to any one of claim 1 to claim 11.

12. Method for detection of a gaseous aldehyde (34), comprising the steps of:
- guiding a gas flow (32) comprising the gaseous aldehyde (34) through a carrier medium (22), the carrier medium (22) having carbon element based dots (24) with photoluminescence property and dispersed therein;
- guiding an excitation light (E) of a specific wavelength through the carrier medium (22);
- detecting luminescent light (L) triggered by the excitation light (E), the luminescent light (L) having a luminescence property;
- detecting concentration of the gaseous aldehyde (34) based on a change of the luminescence property.

13. Method according to claim 12, wherein the carbon element based dots (24) comprises organic polar groups (26), wherein the organic polar group (26) is amino groups.

14. Method according to claim 12, wherein the carbon element based dots (24) is functionalized with organic polar groups (26), wherein the organic polar group (26) is amino groups.

15. Method according to claim 12, wherein the excitation light (E) has a wavelength between 250 nm and 500 nm and the luminescent light (L) has a wavelength between 400 nm and 600 nm.
